# EUROPEAN PATENT SPECIFICATION

(11) **EP 3 324 462 B1**
(45) Date of publication and mention of the grant of the patent: **01.04.2020**
(21) Application number: 17000583.9
(22) Date of filing: 06.04.2017
(51) Int. Cl.: H01M 2/34, H01M 2/04, H01M 2/20

(54) **TOP COVER STRUCTURE FOR POWER BATTERY AND POWER BATTERY**
ABDECKUNGSSTRUKTUR EINER LEISTUNGSBATTERIE SOWIE LEISTUNGSBATTERIE
STRUCTURE DE COUVERCLE SUPÉRIEUR DE BATTERIE D'ACCUMULATEUR D'ÉNERGIE ET BATTERIE D'ACCUMULATEUR

(30) Priority: 16.11.2016 CN 201611007612
(43) Date of publication of application: 23.05.2018
(73) Proprietor: Contemporary Amperex Technology Co., Limited, Jiaocheng District Ningde City Fujian 352100 (CN)
(72) Inventor: WANG, Zhiyu, Ningde City, 352100 (CN); WANG, Peng, Ningde City, 352100 (CN); CAI, Rulai, Ningde City, 352100 (CN); Chen, Baisong, Ningde City, 352100 (CN)
(74) Representative: FARAGO Patentanwälte

(56) References cited:
- CN-A- 105 098 108
- US-A1- 2013 029 191

## Description

### TECHNICAL FIELD

The present application relates to the field of energy storage devices and, particularly, relates to a top cover structure for a power battery and a power battery.

### BACKGROUND

Electric vehicle and energy storage power station usually need power battery having large capacity as the power source. Except large capacity, the power battery should also perform better safety and have a longer cycle life, so as to meet application standards and satisfy people's requirements.

In the prior art, when a power battery is over charged, decomposition of electrolyte in power battery will generate excessive heat in the interior of the power battery, which may cause burning of the battery, or increase the internal pressure of the power battery, leading to explosion of the battery (as long as the power battery is not stopped being charged, the internal pressure will increase continuously, until explosion occurs). Therefore, before the power battery is out of control, an external short circuit structure is needed to cut off the connecting component between a positive electrode tab and a positive electrode terminal (or between a negative electrode tab and a negative electrode terminal), so as to stop charging the power battery continuously. Generally, in order to solve abuse nailing problem of the battery, a resistance is arranged between a positive electrode terminal and a top cover plate, so that the positive electrode terminal is electrically connected with the top cover plate through the resistance.

When a power battery is in a situation of being nailed, if the resistance between the positive electrode terminal and the top cover plate is too small, then the current of external short circuit is too large when nailing, the nailing point is easy to spark, causing the cell be out of control, therefore, when nailing, a large resistance is needed between the positive electrode terminal and the top cover plate.

When a power battery is over charged, the internal pressure of the cell increases for a certain value, the short circuit component deforms upward, so that the positive electrode and the negative electrode of the cell are connected to form a short circuit, a large loop current is used to fuse the connecting component, so as to cut off the main loop. However, if the positive electrode and the negative electrode are connected to form a short circuit, since the resistance in the loop is so small that the current in the loop will be too large (such as, exceeding 10000A), the short circuit component is easy to be fused, thus the short circuit component is fused before the connecting component is fused, which leads to that the loop current cannot maintain, then the connecting component cannot be fused; but if the resistance in the loop is too large, which will cause that the current in the loop is too small (such as, less than 500A), the connecting component will not be fused, which cannot prevent the power battery from being charged continuously. Therefore, when dealing with over-charging of the power battery, it is obvious that the manner of directly connecting a large resistance is not applicable to reduce current.

Based on the above-mentioned reasons, in order to satisfy the over-charging and nailing problems of the power battery at the same time, the top cover structure of the power battery is needed to be re-optimized, so that the power battery can constitute a loop having an appropriate resistance value under the situations of over-charging and nailing.

Prior art document CN 105098108 A discloses a head cover structure of power battery and power battery. The head cover structure of the power battery comprises a first pole rod, a second pole rod, a head cover assembly and a resistor, wherein the first pole rod and the second pole rod are arranged on the head cover assembly; the second pole rod is electrically insulated from the head cover assembly; the resistor is attached to the first pole rod; the first pole rod is electrically connected with the head cover assembly; the head cover assembly comprises a head cover plate, a first short-circuit component and a second short-circuit component; the first short-circuit component and the second short-circuit component are attached to the head cover plate, and are arranged to act upwards when the internal pressure of the power battery is increased, so that the first pole rod is electrically connected with the second pole rod to form a protective loop; and the first short-circuit component and the resistor are in a parallel connection relation when the protective loop is formed. According to the head cover structure, the power battery can respectively form independent protective circuits in overcharge and cotter pin abuse processes, so that the power battery is effectively protected.

Prior art document US 2013029191 A1 discloses a rechargeable battery, including an electrode assembly; a case housing the electrode assembly; a cap assembly including a cap plate having a short-circuit hole and sealing an opening of the case; and a short-circuiting member including a short-circuiting plate arranged at the short-circuit hole and a connection plate covering at least a portion of the short-circuit hole at an exterior side, the connection plate being spaced apart from the cap plate and electrically connected to the electrode assembly, and the case and the cap assembly are electrically insulated from the electrode assembly.

### SUMMARY

The present application provides a top cover structure for a power battery and a power battery, which can solve the above problems.

A first aspect of the present application provides a top cover structure for a power battery, including a first electrode assembly, a second electrode assembly, a first resistance, a second resistance, a third resistance, a top cover plate, a first short circuit component and a second short circuit component,
the first electrode assembly is electrically connected with the top cover plate through the first resistance for all time, the second electrode assembly is insulated from the top cover plate in a normal state,
the first short circuit component and the second short circuit component are both attached to the top cover plate,
when an internal pressure of the power battery exceeds a reference pressure, the first short circuit component and the second short circuit component deform by effect of pressure, so as to form a first electrical connecting path passing through the first electrode assembly, the first short circuit component, the top cover plate, the second short circuit component and the second electrode assembly, and to form a second electrical connecting path passing through the first electrode assembly, the first resistance, the top cover plate, the second short circuit component and the second electrode assembly, the second resistance and the third resistance are connected into the first electrical connecting path in series;
a resistance value of the first resistance is larger than either a resistance value of the second resistance or a resistance value of the third resistance;
a resistance value of the first resistance is at least 1000 times larger than a sum of a resistance value of the second resistance and a resistance value of the third resistance; the resistance value of the first resistance is between 1Ω∼100000Ω.

Preferably, the first resistance is connected with the second resistance in series for all time.

Preferably, the second resistance is either integrated or arranged into the first electrode assembly;
the first short circuit component is electrically connected with the first electrode assembly through the top cover plate, the first resistance and the second resistance for all time.

Preferably, the first electrode assembly includes a first electrode terminal and a first conductive plate, the first electrode terminal passes through the top cover plate,
the first conductive plate includes a first connecting portion and a first extending portion which are connected with each other, the second resistance is connected between the first connecting portion and the first electrode terminal in series,
the first short circuit component contacts with the first extending portion after deforming by effect of pressure;
either the first resistance is connected between the second resistance and the top cover plate in series, or the first resistance is connected between the first connecting portion and the top cover plate in series.

Preferably, when the first resistance is connected between the first connecting portion and the top cover plate in series,
the second resistance is at least one of forms consisting of:
form one, the second resistance is a resistance layer;
form two, the second resistance is either integrated or arranged onto the first conductive plate.

Preferably, the second resistance is integrated onto the first connecting portion, a structure of the first conductive plate is as follows:
the first conductive plate includes a first conductive layer and a second conductive layer, the first conductive layer and the second conductive layer are arranged by stacking, the first conductive layer is configured to contact with the second short circuit component, and a resistivity of the first conductive layer and a resistivity of the second short circuit component are both less than a resistivity of the second conductive layer.

Preferably, the second resistance is connected with the first resistance in parallel.

Preferably, the first electrode assembly includes a first electrode terminal and a first conductive plate, the first electrode terminal passes through the top cover plate,
the first conductive plate includes a first connecting portion and a first extending portion which are connected with each other, the first short circuit component contacts with the first extending portion after deforming by effect of pressure,
the second resistance is connected between the first connecting portion and the first extending portion in series;
the first resistance is connected between the first connecting portion and the top cover plate in series, or the first resistance is connected between the first electrode terminal and the top cover plate in series.

Preferably, on the first conductive plate, the first extending portion and the first short circuit component adopt a same material.

Preferably, the first electrode assembly includes a first electrode terminal and a first conductive plate, the first electrode terminal passes through the top cover plate,
the first conductive plate comprises a first connecting portion and a first extending portion which are connected with each other,
the first resistance is connected between the first electrode terminal and the top cover plate in series, the first short circuit component contacts with the first extending portion after deforming by effect of pressure,
the second resistance is connected between the first electrode terminal and the first conductive plate in series.

Preferably, the first resistance is located underneath the top cover plate, the second resistance is located above the top cover plate.

Preferably, the third resistance is either integrated or arranged into the second electrode assembly.

Preferably, the second electrode assembly includes a second electrode terminal and a second conductive plate, the second electrode terminal passes through the top cover plate, and is connected with and insulated from the top cover plate,
the second conductive plate is also connected with and insulated from the top cover plate, the second conductive plate includes a second connecting portion and a second extending portion which are connected with each other,
the second short circuit component contacts with the second extending portion after deforming by effect of pressure;
the third resistance is connected between the second connecting portion and the second electrode terminal in series, or the third resistance is connected between the second connecting portion and the second extending portion in series.

Preferably, on the second conductive plate, the second extending portion and the second short circuit component adopt a same material.

Preferably,
the third resistance is at least one of forms consisting of:
form one, the third resistance is a resistance layer;
form two, the third resistance is either integrated or arranged onto the second conductive plate.

Preferably, the third resistance is integrated onto the second conductive plate, a structure of the second conductive plate is as follows:
the second conductive plate includes a first conductive layer and a second conductive layer, the first conductive layer and the second conductive layer are arranged by stacking, the first conductive layer is configured to contact with the second short circuit component, and a resistivity of the first conductive layer and a resistivity of the second short circuit component are both less than a resistivity of the second conductive layer.

A second aspect of the present embodiment provides a power battery, including a bare cell and the top cover structure for a power battery,
the bare cell has two electrodes with opposite electrical properties, one of the electrodes is electrically connected with the first electrode assembly, the other electrode thereof is electrically connected with the second electrode assembly, when an internal pressure of the power battery exceeds a reference pressure, the first short circuit component and the second short circuit component deform by effect of pressure, so as to form a first electrical connecting loop from the bare cell back to the bare cell passing through the first electrical connecting path, and to form a second electrical connecting loop from the bare cell back to the bare cell passing through the second electrical connecting path.

Preferably, further including a first connecting piece and a second connecting piece,
one of the electrodes is electrically connected with the first electrode assembly through the first connecting piece, the other electrode thereof is electrically connected with the second electrode assembly through the second connecting piece, and
a fusing member is formed on the first connecting piece and/or the second connecting piece.

Preferably, the fusing member is formed through providing a gap and/or a hole on the first connecting piece and/or the second connecting piece.

The technical solution provided by the embodiments of the present application can reach the following beneficial effect:

The top cover structure for a power battery provided by the present application can arrange a first resistance, a second resistance, a third resistance and the corresponding electrical connecting structure at the same time, so as to respectively form a circuit with an appropriate resistance in situation of nailing or over-charging of the power battery.

It should be understood that, the above general description and the following detailed description are merely exemplary, which cannot limit the present application.

### BRIEF DESCRIPTION OF DRAWINGS

FIG. 1 is an explosive structural schematic diagram of a top cover structure for a power battery provided by an embodiment of the present application;
FIG. 2 is a structural schematic diagram of a top cover structure for a power battery when viewing from the top provided by an embodiment of the present application;
FIG. 3 is a structural schematic diagram of a lateral section along A-A in FIG. 2;
FIG. 4 is a partial enlarged schematic diagram of part B of a first top cover structure for a power battery in FIG. 3 with a second resistance being integrated in a first electrode assembly provided by an embodiment of the present application;
FIG. 5 is a partial enlarged schematic diagram of part B of a second top cover structure for a power battery in FIG. 3 with a second resistance being integrated in a first electrode assembly provided by an embodiment of the present application;
FIG. 6 is a partial enlarged schematic diagram of part B of a third top cover structure for a power battery in FIG. 3 with a second resistance being integrated in a first electrode assembly provided by an embodiment of the present application;
FIG. 7 is a partial enlarged schematic diagram of part B of a fourth top cover structure for a power battery in FIG. 3 with a second resistance being integrated in a first electrode assembly provided by an embodiment of the present application;
FIG. 8 is a partial enlarged schematic diagram of part B of a fifth top cover structure for a power battery in FIG. 3 with a second resistance being integrated in a first electrode assembly provided by an embodiment of the present application;
FIG. 9 is a partial enlarged schematic diagram of part B of a sixth top cover structure for a power battery in FIG. 3 with a second resistance being integrated in a first electrode assembly provided by an embodiment of the present application;
FIG. 10 is a partial enlarged schematic diagram of part B of a seventh top cover structure for a power battery in FIG. 3 with a second resistance being integrated in a first electrode assembly provided by an embodiment of the present application;
FIG. 11 is a partial enlarged schematic diagram of part C of a first top cover structure for a power battery in FIG. 3 with a third resistance being integrated in a second electrode assembly provided by an embodiment of the present application;
FIG. 12 is a partial enlarged schematic diagram of part C of a second top cover structure for a power battery in FIG. 3 with a third resistance being integrated in a second electrode assembly provided by an embodiment of the present application;
FIG. 13 is a partial enlarged schematic diagram of part C of a third top cover structure for a power battery in FIG. 3 with a third resistance being integrated in a second electrode assembly provided by an embodiment of the present application;
FIG. 14 is a structural schematic diagram of a first connecting block having a surface layer coated with a Teflon® layer as a second resistance when viewing from the top;
FIG. 15 is a structural schematic diagram of a second conductive plate;
FIG. 16 is a structural schematic diagram of a first conductive plate;
FIG. 17 is an integral structural schematic diagram of a power battery provided by an embodiment of the present application.

### Reference signs:

2 - bare cell;
   2a - positive electrode tab;
   2b - negative electrode tab;
3 - housing;
4 - first connecting piece;
5 - second connecting piece;
6 - fusing member;
10 - first electrode assembly;
   100 - first electrode terminal;
   102 - first connecting block;
   104 - first conductive plate;
      104a - first connecting portion;
      104b - first extending portion;
      104c - first low over-current area region;
      104d - first conductive layer;
      104e - second conductive layer;
   106 - first insulating piece
20 - second electrode assembly;
   200 - second electrode terminal;
   202 - second connecting block;
   204 - second conductive plate;
      204a - second connecting portion;
      204b - second extending portion;
      204c - second low over-current area region;
30 - first resistance;
40 - second resistance;
50 - top cover plate;
   500 - first mounting hole;
   502 - second mounting hole;
60 - first short circuit component;
70 - second short circuit component;
80 - third resistance.

The accompanying drawings here are incorporated into the description and form a part thereof, which show embodiments of the present application, and are used to explain the principle of the present application together with the description.

### DESCRIPTION OF EMBODIMENTS

The present application will be described in further detail with reference to the following embodiments and the accompanying drawings. The "front", "back", "left", "right", "up", "down" used in this paper take the placement status of a top cover structure for a power battery in the drawings as reference.

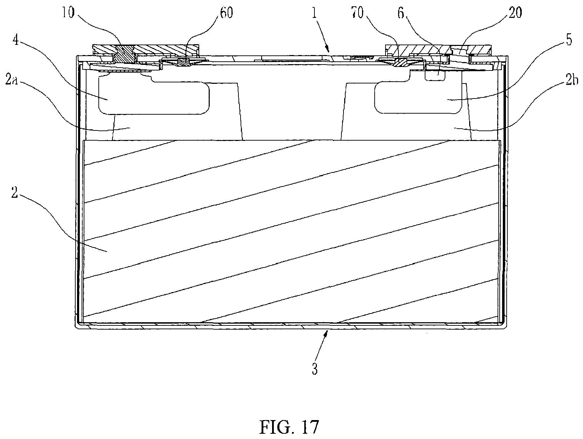

The present application provides a power battery, as shown in FIG. 17, which includes a top cover structure 1 for a power battery, a bare cell 2, an housing 3, a first connecting piece 4 and a second connecting piece 5, the bare cell 2 is generally formed by a positive electrode plate, a negative electrode plate and a separator through winding or stacking, a positive electrode tab 2a and a negative electrode tab 2b are respectively provided on the positive electrode plate and the negative electrode plate. The housing 3 is generally made of metal material, and forms, together with the top cover structure 1 for a power battery, a cavity for accommodating the bare cell 2, the bare cell 2 is arranged in the cavity.

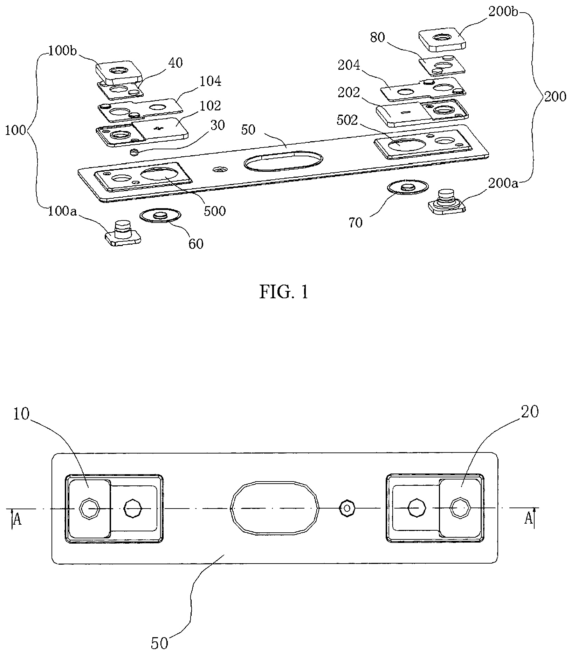

As shown from FIG. 1 to FIG. 3, the top cover structure for a power battery includes a first electrode assembly 10, a second electrode assembly 20, a first resistance 30, a second resistance 40, a top cover plate 50, a first short circuit component 60, a second short circuit component 70 and a third resistance 80. The first electrode assembly 10 and the second electrode assembly 20 are both attached onto the top cover plate 50, and, either the first electrode assembly 10 or the second electrode assembly 20 is connected with the positive electrode tab 2a or the negative electrode tab 2b of the bare cell through a first connecting piece 4, the other electrode assembly is connected with the other electrode tab of the bare cell through a second connecting piece 5. For example, in FIG. 17, the first electrode assembly 10 is electrically connected with the positive electrode tab 2a of the bare cell 2 through the first connecting piece 4, at the same time, the second electrode assembly 20 is electrically connected with the negative electrode tab 2b of the bare cell 2 through the second connecting piece 5, so as to extend the positive electrode and the negative electrode of the power battery respectively. A fusing member 6 with a gap or of a hole shape is formed on the second connecting piece 5, absolutely, the fusing member 6 can also be arranged on the first connecting piece 4 at the same time or in individual.

In a general situation, the first electrode assembly 10 includes a first electrode terminal 100, the bottom of the first electrode terminal 100 is located underneath the top cover plate 50, the top of the first electrode terminal 100 will go through the top cover plate 50. It should be noted that, the first electrode terminal 100 cannot contact and be electrically connected with the top cover plate 50 directly, but be fixed with a first insulating piece 102 therebetween, in addition, the first electrode terminal 100 needs to keep an electrical connection with the top cover plate 50 through the first resistance 30.

In order to be convenient for an external electrical device to be electrically connected with the power battery, generally, the first electrode terminal 100 can also be designed to be two parts including a first electrode terminal body 100a and a first connecting block 100b, the first electrode terminal body 100a extends through the top cover plate 50, and the first connecting block 100b can be fixed with the top of the first electrode terminal body 100a through a welding or riveting manner, so as to increase contacting area and improve structure of the contacting surface, thereby providing a better connection. In the present embodiment, the first short circuit component 60 and the second short circuit component 70 are two important circuit switches, when the first short circuit component 60 is not deforming, the circuit structure of the top cover structure 1 for a power battery is a nailing protection circuit, when nailing occurs, the nailing protection circuit can be functioned effectively; however, when the first short circuit component 60 and the second short circuit component 70 are connected with the circuit at the same time, the circuit structure of the top cover structure 1 for a power battery will be transformed to an over-charging protection circuit, so as to generate an appropriate circuit to fuse the first connecting piece 4 and/or the second connecting piece 5 near by the fusing member 6, thereby cutting off the electrical connection between the positive electrode tab 2a and the first electrode assembly 10, and/or the electrical connection between the negative electrode tab 2b and the second electrode assembly 20.

The top cover for a power battery has limited space, particularly near the two electrodes because of a plurality of connecting pieces and insulating pieces are needed to be arranged, thereby it is very crowded, in this situation, arranging the first short circuit component 60 thereon also requires better structure design and processing technique.

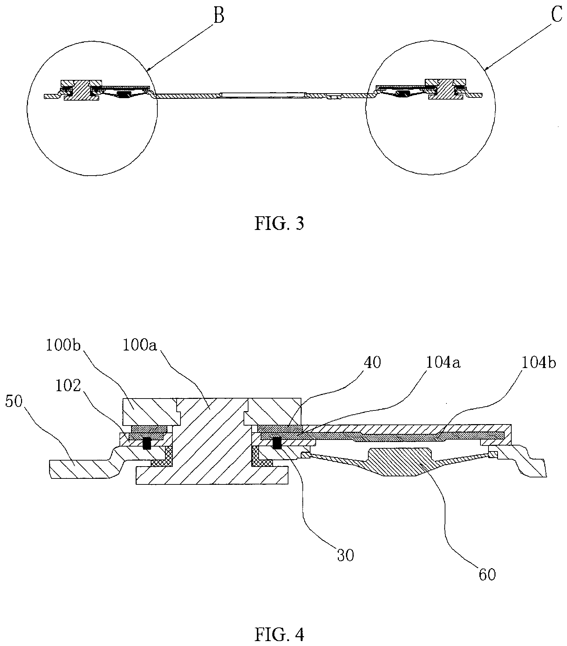

As shown from FIG. 4 to FIG. 10, in order to make the first short circuit component 60 being connected with the circuit conveniently, first electrode assembly 10 of the present embodiment is further provided with a first conductive plate 104 in the interior thereof, the first conductive plate 104 includes a first connecting portion 104a and a first extending portion 104b which are connected with each other, the first connecting portion 104a is configured to be electrically connected with the first electrode terminal body 100a or the first connecting block 100b of the first electrode terminal 100, and the first extending portion 104b extends outward for a certain distance, at the same time, the first conductive plate 104 is fixed with the top cover plate 50 through the first insulating piece 102. In the present embodiment, the first short circuit component 60 generally adopts a deformable plate form, absolutely, other components which can deform when the internal pressure of the power battery is increasing can also be adopted.

Referring to FIG. 1, the top cover plate 50 is provided with a first mounting hole 500 at a location having a certain distance from the first electrode terminal 100, the first short circuit component 60 is assembled in the first mounting hole 500 and seals the first mounting hole 500, the first extending portion 104b extends above the first mounting hole 500. The first short circuit component 60 can contact the first extending portion 104b and achieve an electrical connection after deforming upward.

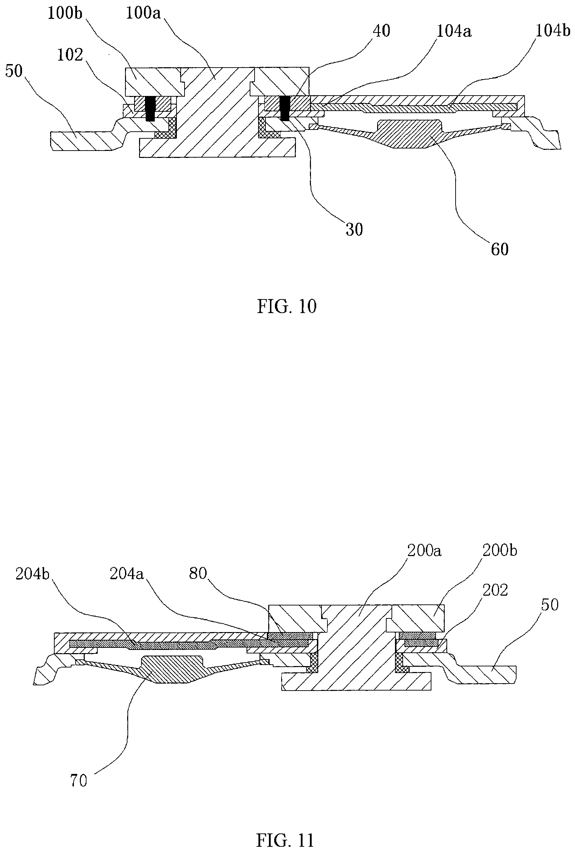

Please referring to FIG. 1, the structure of the second electrode assembly 20 can be same as the first electrode assembly 10, also can be different. In order to be convenient for connecting with the external electrical device and the second short circuit component 70, the second electrode assembly 20 can also adopt a structure similar to the first electrode assembly 10, specifically including a second electrode terminal 200, a second insulating piece 202 and a second conductive plate, the second electrode terminal 200 includes a second electrode terminal body 200a and a second connecting block 200b, the second electrode terminal body 200a passes through the top cover plate 50 and is connected with the second connecting block 200b. As shown from FIG. 11 to FIG. 13, the second conductive plate 204 includes a second connecting portion 204a and a second extending portion 204b which are connected with each other, the second connecting portion 204a is configured to be electrically connected with the second electrode terminal body 200a or the second connecting block 200b of the second electrode terminal 200, the second extending portion 204b extends outward for a certain distance. The top cover plate 50 is provided with a second mounting hole 502 at a location having a certain distance from the second electrode terminal 200, the second short circuit component 70 is assembled in the second mounting hole 502 and seals the second mounting hole 502, the second extending portion 204b extends above the second mounting hole 502. The second short circuit component 70 can contact the second extending portion 204b and achieve an electrical connection after deforming upward. Before the second short circuit component 70 contacts with the second extending portion 204b, the second electrode assembly 20 is connected with the top cover plate 50 only through the second insulating piece 202 in a general situation, and thus is insulated.

In the above structure, the first short circuit component 60 will contact with the first conductive plate 104 after deforming, if the difference of resistivity at the contacting position of the first short circuit component 60 and the first conductive plate 104 is relatively large, then the first short circuit component 60 may be fused directly, however, this situation can be effectively avoided if the resistivity therebetween are similar at the contacting position. Therefore, on the first conductive plate 104, at least the material of the first extending portion 104b is the same as the first short circuit component 60, aluminum metal is recommended in practical production. Similarly, on the second conductive plate 204, at least the material of the second extending portion 204b is the same as the second short circuit component 70.

The structure of the two protection circuits will be described in detail below.

In a general situation, in order to prevent the top cover plate 50 and the housing 3 of the power battery from being corroded, the positive electrode tab 2a of the bare cell is needed to be connected with the top cover plate 50 and the housing 3 all the time, so that the top cover plate 50 and the housing 3 is positively charged.

All the following embodiments take that the first electrode assembly 10 is connected with the positive electrode tab 2a, the second electrode assembly 20 is connected with the negative electrode tab 2b as an example, the first electrode terminal 100 is electrically connected with the top cover plate 50 through the first resistance 30 all the time, so that the top cover plate 50 is positively charged for all time.

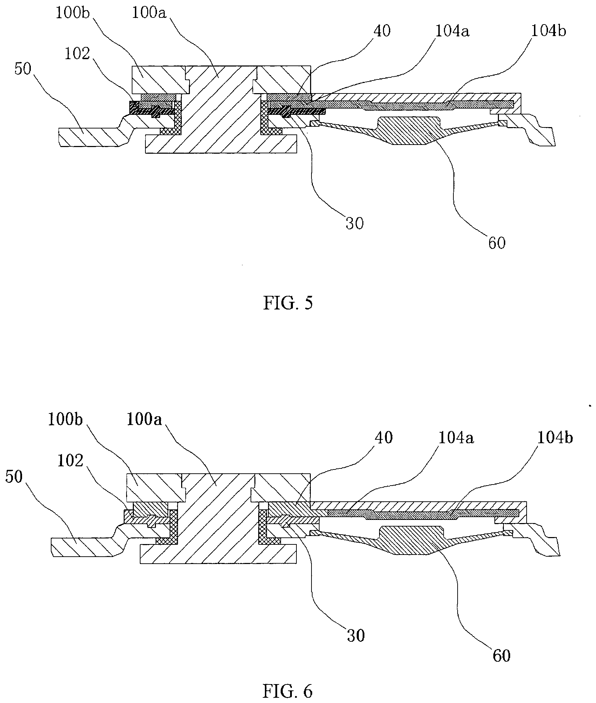

When nailing occurs, and the pressure in the housing is not sufficient to make the first short circuit component 60 deform, the nail will make the negative electrode plate in the power battery be connected with the housing and the top cover plate 50, the top cover plate 50 is connected with the first electrode terminal 100 of the first electrode assembly 10 through a first resistance 30, and then finally connected with the positive electrode plate in the interior of the bare cell through the positive electrode tab 2a, so as to form a nailing loop. The resistance value of the first resistance 30 is generally 1∼100000Ω. In the nailing loop, the existence of the first resistance 30 can effectively reduce the current in the nailing loop, and effectively prevent the situation that since the current is too large, causing sparking at the nailing point, igniting the electrolyte, and result in burning of the power battery. The first resistance 30 can adopt a resistance block (referring to FIGs. 4, 8, 9, 10), conductive plastic (referring to FIGs. 5-7) and the like, when adopting conductive plastic, the first resistance 30 can replace or partially replace the first insulating piece 102.

When over-charging occurs, since the circuit needs to generate a larger current to fuse the fusing member 6, but the resistance value of the first resistance 30 is too large, therefore, it should be prevented that the first resistance 30 is directly connected with the circuit in series in the over-charging protection circuit. At the same time, in order to prevent from causing the top of the first short circuit component 60 and the second short circuit component 70 be cut or fused by the over-large current, a second resistance 40 is needed to be connected into the circuit, the resistance value of the second resistance 40 cannot be too large, generally cannot exceed 1/1000 of the resistance value of the first resistance 30, the range of 0.1∼100mΩ is preferred. In order to satisfy the above-mentioned requirements, the present embodiment takes a careful consideration on the arrangement location of the first resistance 30 and the second resistance 40, which will be described in detail below.

In the present embodiment, after the first short circuit component 60 contacts and is electrically connected with the first extending portion 104b, a low resistance branch and a high resistance branch can be formed, and the first resistance 30 is located in the high resistance branch, so as to decrease the resistance value of the whole over-charging protection circuit.

In order to satisfy such requirement, the first resistance 30 at least has two connection structures as follows:
Structure One: the first resistance 30 can be connected in series between the first connecting portion 104a and the top cover plate 50 (referring to FIGs. 4, 5, 7, 8), thus, a first branch is constituted from the first connecting portion 104a to the top cover plate 50 passing through the first resistance 30, a second branch is constituted from the first connecting portion 104a to the top cover plate 50 passing through the first extending portion 104b and the first short circuit component 60, the two branches are in parallel.
Structure Two: the first electrode terminal body 100a or the first connecting block 100b can be electrically connected with the top cover plate 50 passing through the first resistance 30, at the same time, the first connecting portion 104a is also electrically connected with the first electrode terminal body 100a or the first connecting block 100b (referring to FIGs. 6, 9, 10). That means, the first resistance 30 and the first connecting portion 104a are electrically connected with the first electrode terminal 100 at the same time. Thus, a first branch is constituted from the first electrode terminal 100 to the top cover plate 50 passing through the first resistance 30, a second branch is constituted from the first connecting portion 104a to the top cover plate 50 passing through the first extending portion 104b and the first short circuit component 60, the two branches are still in parallel.

When the power battery is over charged, and the internal pressure exceeds the reference pressure, the first short circuit component 60 and the second short circuit component 70 will deform by effect of pressure. Specifically, the first short circuit component 60 and the second short circuit component 70 may deform at the same time, or respectively deforms one after another. After the first short circuit component 60 and the second short circuit component 70 deform and contact with the first electrode assembly 10 and the second electrode assembly 20, respectively, a first electrical connecting path and a second electrical connecting path can be formed. The first electrical connecting path arrives at the second electrode assembly 20 from the first electrode assembly 10 passing through the first short circuit component 60, the top cover plate 50, the second short circuit component 70, the second electrical connecting path arrives at the second electrode assembly 20 from the first electrode assembly 10 passing through the first resistance 30, the top cover plate 50, the second short circuit component 70. At this time, the second resistance 40 needs to be connected into the first electrical connecting path in series.

Since the first electrode assembly 10 and the second electrode assembly 20 are respectively connected with the positive electrode plate and the negative electrode plate of the bare cell 2, therefore, after the first electrical connecting path and the second electrical connecting path are formed, two loops will be formed at the same time, that is, the first electrical connecting loop of the bare cell passing through the first electrical connecting path then back to the bare cell 2, and the second electrical connecting loop of the bare cell 2 passing through the second electrical connecting path then back to the bare cell, the first electrical connecting loop and the second electrical connecting loop constitute the over-charging protection loop. Since the resistance value of the first electrical connecting path is far less than the resistance value of the second electrical connecting path, since a larger current can be formed on the first electrical connecting loop at this time, and since the second resistance 40 is provided at the same time, so as to avoid the first short circuit component 60 and the second short circuit component 70 from being top cut or fused, so as to guarantee that the fusing member 6 is fused firstly, and prevent the power battery from being over-charged.

Therefore, the second resistance 40 has the following connecting manners:

A first connecting manner: the second resistance 40 keeps a serial connection with the first resistance 30. At this time, the second resistance 40 can be integrated in the first electrode assembly 10 (referring to FIGs. 4, 5, 6, 8).

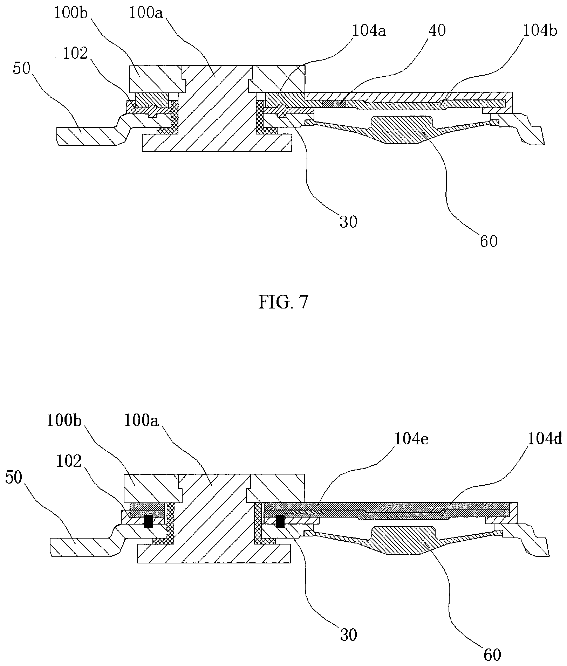

The second connecting manner: the second resistance 40 is connected with the first resistance 30 in parallel, in this situation, generally, the second resistance 40 is integrated in the first electrode assembly 10 (referring to FIGs. 7, 9, 10).

Firstly, the first connecting manner will be described in detail.

In the first connecting manner, for the solution that the second resistance 40 and the first resistance 30 to be integrated in the first electrode assembly 10 with a serial relation, it should be guaranteed that the first short circuit component 60 is connected into the circuit at the second resistance 40 or between the first resistance 30 and the second resistance 40 after contacting the first electrode assembly 10, so as to form a low resistance branch and a high resistance branch including the first resistance 30 after the first short circuit component 60 deforms, and the second resistance 40 is in the main loop all the time.

Specifically, the second resistance 40 is connected in series between the first connecting portion 104a and the first electrode terminal 100. That means, the second resistance 40 can be connected in series between the first electrode terminal body 100a and the first connecting portion 104a, and can also be connected in series between the first connecting block 100b and the first connecting portion 104a.

At this time, as shown in FIG. 4 and FIG. 5, the first resistance 30 can adopt Structure One, thus, the first resistance 30 and the second resistance 40 are respectively located at two sides of the first connecting portion 104a, the first short circuit component 60 can be conducted to the first connecting portion 104a by the first extending portion 104b after contacting with the first extending portion 104b, that is, being connected into the circuit between the first resistance 30 and the second resistance 40.

In the above-mentioned solution, the second resistance 40 can be the following forms:

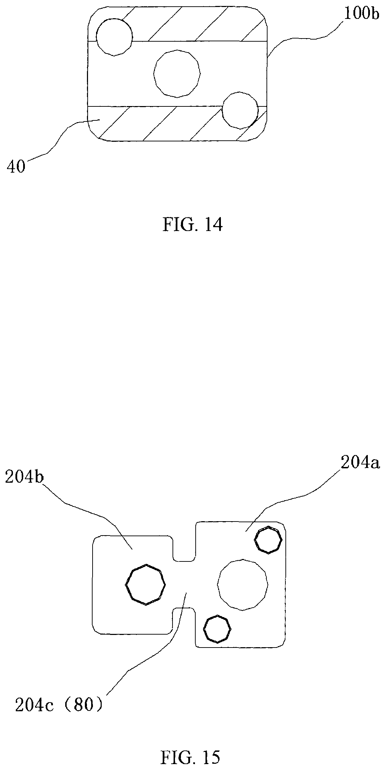

Form One, the second resistance 40 adopts a resistance layer structure directly, for example, insulating the surface of the first electrode terminal body 100a, the first connecting block 100b or the first connecting portion 104a by spraying a layer of Teflon® material (referring to FIG. 14), so as to increase resistance value.

Form Two, the second resistance 40 is arranged on or integrated into the first conductive plate 104. The two manners are similar, the difference lies in whether the second resistance 40 and the first conductive plate 104 can be distinguished or not. For example, embedding the second resistance 40 into the first connecting portion 104a can be regarded as an arranging manner, while it can be regarded as an integrating manner if material having a high resistivity such as ni-chrome and the like is adopted to produce the first connecting portion 104a, and aluminum material is adopted to produce the first extending portion 104b.

Besides, there is a more preferred solution, as shown in FIG. 8, in this solution, the first conductive plate 104 adopts a double-layer-structure design, including the first conductive layer 104d and the second conductive layer 104e which are stacked, when assembling, the first conductive layer 104d needs to be provided directed toward the first short circuit component 60, and configured to contact with the first short circuit component 60, the second conductive layer 104e then is provided away from the first short circuit component 60. In this structure, the resistivity of the first conductive layer 104d and the first short circuit component 60 are both less than the resistivity of the second conductive layer 104e, it is most preferred that the resistivity of the first conductive layer 104d is same or close to the resistivity of the first short circuit component 60, and a part of the second conductive layer 104e can be regarded as the second resistance 40.

Since the first conductive plate 104 itself is of a plate-shaped structure, therefore, a too complex structure will increase processing difficulty significantly, leading to a great increasing of cost. However, the double-layer structure is a relative simple structure. When using this structure, although only a part of the second conductive layer 104e can be used as the second resistance 40, while the rest parts are all short circuit by the first conductive layer 104d, however, since it is convenient to process the double-layer stacking structure, thereby the processing cost can be saved a lot, and since an ordered structure is achieved, which can also simply assembling technique, the total cost is still low.

Besides, as shown in FIG. 6, the first resistance 30 can also adopt Structure Two, it should be noted that, since the second resistance 40 is added, therefore, the electrical connection between the first resistance 30 and the first electrode terminal 100 also needs the second resistance 40, that is, either the first resistance 30 or the first connecting portion 104a is electrically connected with the first electrode terminal 100 through the second resistance 40, the first short circuit component 60 can be conducted to the second resistance 40 passing through the first extending portion 104b, the first connecting portion 104a after contacting with the first extending portion 104b.

The present embodiment will describe the second connecting manner, that is, describe the manner of connecting the first resistance 30 and the second resistance 40 in parallel in detail. The first resistance 30 still adopts Structure One or Structure Two. At this time, the second resistance 40 can be connected in series between the first connecting portion 104a and the first extending portion 104b (referring to FIG. 7). Thus, the first short circuit component 60 can be a switch for controlling the connecting state of the second resistance 40. In a normal state or a nailing state, the second resistance 40 is in an open circuit state, which is not connected into the circuit, while after the first short circuit component 60 deforms upward and contacts with the first extending portion 104b by the effect of the internal pressure of the power battery, the second resistance 40 is connected into the circuit, at this time, the second resistance 40 keeps a parallel relation with the first resistance 30.

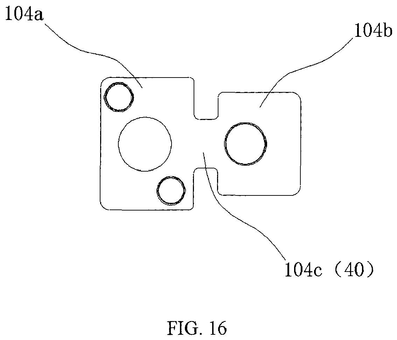

As shown in FIG. 16, the second resistance 40 can be directly integrated on the first conductive plate 104, specifically, a first low over-current area region 104c is provided between the first connecting portion 104a and the first extending portion 104b, the over-current area of the first low over-current area region 104c is less than the first connecting portion 104a, thus, the first low over-current area region 104c can have larger resistance, so as to be regarded as the second resistance 40.

Besides, when the first resistance 30 adopts Structure Two, the second resistance 40 can also be connected in series at the first electrode terminal body 100a or between the first connecting block 100b and the first conductive plate 104.

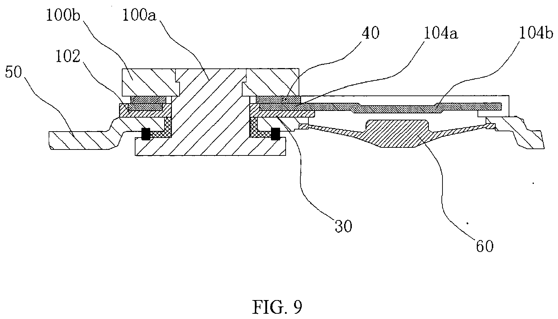

For example, as shown in FIG. 9, the first resistance 30 is located underneath the top cover plate 50, and is electrically connected with the first electrode terminal body 100a and the top cover plate 50, respectively; the second resistance 40 is located above the top cover plate 50, and is electrically connected with the first connecting block 100b and the first connecting portion 104a of the first conductive plate 104, respectively.

For another example, as shown in FIG. 10, the first resistance 30 and the second resistance 40 are both located between the top cover plate 50 and the first connecting block 100b, the first resistance 30 the second resistance 40 do not contact with each other or are insulated by filling insulating material therebetween, and the first resistance 30 and the second resistance 40 are both electrically connected with the first connecting block 100b, besides, the first resistance 30 is connected with the top cover plate 50 downward, and the side portion of the second resistance 40 is connected with the first connecting portion 104a of the first conductive plate 104.

In the two solutions, in a normal state or a nailing state, the second resistance 40 is in an open circuit state, which is not connected into the circuit, while after the first short circuit component 60 deforms upward and contacts with the first extending portion 104b by the effect of the internal pressure of the power battery, the second resistance 40 is connected into the circuit, at this time, the second resistance 40 still keeps a parallel relation with the first resistance 30.

For the solution that the second resistance 40 is integrated in the first electrode assembly 10, in the parallel connecting manner, the second resistance 40 can be arranged along the length direction of the first conductive plate 104, therefore, the space is relatively larger comparing with the serial connecting solution, which is more convenient to adjust the resistance value of the second resistance 40, and is convenient for heat dissipation at the same time.

After the over-charging protection circuit is formed, the first short circuit component 60, the second short circuit component 70 and the second resistance 40 are the concentration areas of heat dissipation, comparing with the parallel manner, the arranging position of the second resistance 40 in the serial connecting manner is more flexible, therefore, which can be arranged at the location far away from the first short circuit component 60 and the second short circuit component 70, so as to spread the heat generation areas, thus is more convenient for heat dissipation.

In the above-mentioned solution, the third resistance 80 can be the following forms:

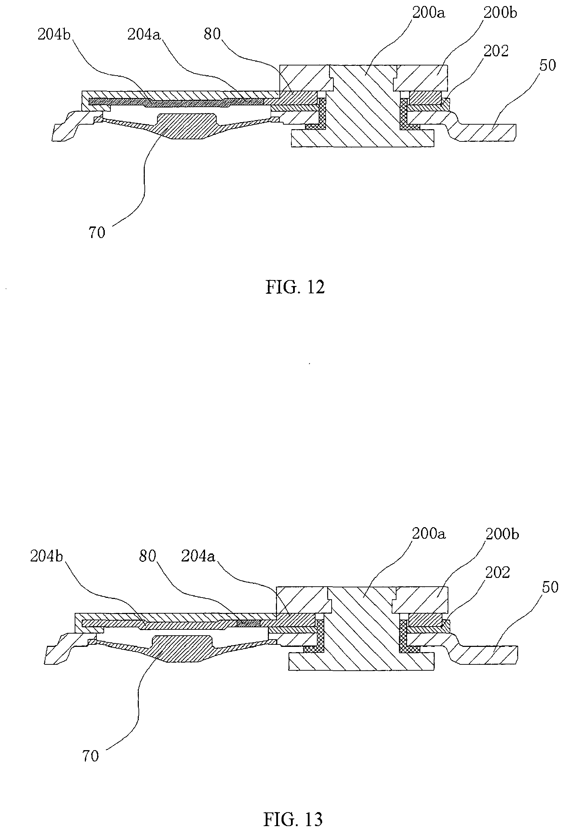

As shown from FIG. 11 to FIG. 13, the third resistance 80 can be integrated into the second electrode assembly 20, specifically, can be connected between the second electrode terminal body 200a and the second connecting portion 204a in series, and can also be connected between the second connecting block 200b and the second connecting portion 204a in series (referring to FIG. 11 and FIG. 12), or be connected between the second connecting portion 204a and the second extending portion 204b in series (referring to FIG. 13).

For this solution, the third resistance 80 can be the following forms:

Form One, the third resistance 80 adopts a resistance layer structure directly, for example, insulating the surface of the second electrode terminal body 200a, the second connecting block 200b or the second connecting portion 204a by spraying a layer of Teflon® material, so as to increase resistance value.

Form Two, the third resistance 80 is either integrated or arranged onto the second conductive plate 204.

Form Two can be achieve through improving the structure, as shown in FIG. 15, a second low over-current area region 204c can be provided on the second extending portion 204b, the over-current area of the second low over-current area region 204c is less than the second connecting portion 204a, thus, the second low over-current area region 204c can have larger resistance, so as to be regarded as the third resistance 80.

Besides, as a preferred solution, the second conductive plate 204 can also adopt a double-layer structure design, the specific structure is the same as the first conductive plate 104, the connecting relation with the second short circuit component 70 is the same as the relation between the first conductive plate 104 and the first short circuit component 60, which will not be repeated here.

In order to guarantee that the first short circuit component 60 and the second short circuit component 70 will not be fused, an appropriate resistance is needed to be connected into the first electrical connecting path in series. Assuming only a resistance is added (for example only adding a second resistance 40 or a third resistance 80), if the resistance value of this resistance is too small, which will not achieve the effect of preventing the first short circuit component 60 and the second short circuit component 70 from being fused, but if the resistance value of the resistance is too large, which will melt the resistance due to huge heat generated by the resistance, which cannot achieve the effect of stopping the power battery from being charged continuously. In the present embodiment, the design that the second resistance 40 and the third resistance 80 are respectively integrated in the first electrode assembly 10 and the second electrode assembly 20 can lower the structural integration level of the top cover for a power battery, particularly, the first electrode assembly 10, at the same time, through arranging the resistances separately can also sufficiently spread the heat, so as to achieve a better effect.

The top cover structure for a power battery provided by the present application can form a circuit with an appropriate resistance in situations of nailing or over-charging of the power battery, respectively.

## Claims

1. A top cover structure for a power battery, **characterized in that**, comprising a first electrode assembly (10), a second electrode assembly (20), a first resistance (30), a second resistance (40), a third resistance (80), a top cover plate (50), a first short circuit component (60) and a second short circuit component (70), wherein
the first electrode assembly (10) is electrically connected with the top cover plate (50) through the first resistance (30) for all time, the second electrode assembly (20) is insulated from the top cover plate (50) in a normal state,
the first short circuit component (60) and the second short circuit component (70) are both attached to the top cover plate (50),
when an internal pressure of the power battery exceeds a reference pressure, the first short circuit component (60) and the second short circuit component (70) deform by effect of pressure, so as to form a first electrical connecting path passing through the first electrode assembly (10), the first short circuit component (60), the top cover plate (50), the second short circuit component (70) and the second electrode assembly (20), and to form a second electrical connecting path passing through the first electrode assembly (10), the first resistance (30), the top cover plate (50), the second short circuit component (70) and the second electrode assembly (20), the second resistance (40) and the third resistance (80) are connected into the first electrical connecting path in series;
a resistance value of the first resistance (30) is larger than either a resistance value of the second resistance (40) or a resistance value of the third resistance (80);
a resistance value of the first resistance (30) is at least 1000 times larger than a sum of a resistance value of the second resistance (40) and a resistance value of the third resistance (80); the resistance value of the first resistance (30) is between 1Ω∼100000Ω.

2. The top cover structure for a power battery according to claim 1, **characterized in that**, the first resistance (30) is connected with the second resistance (40) in series for all time.

3. The top cover structure for a power battery according to claim 2, **characterized in that**, the second resistance (40) is either integrated or arranged into the first electrode assembly (10);
the first short circuit component (60) is electrically connected with the first electrode assembly (10) through the top cover plate (50), the first resistance (30) and the second resistance (40) for all time.

4. The top cover structure for a power battery according to claim 3, **characterized in that**, the first electrode assembly (10) comprises a first electrode terminal (100) and a first conductive plate (102), the first electrode terminal (100) passes through the top cover plate (50),
the first conductive plate (102) comprises a first connecting portion (104a) and a first extending portion (104b) which are connected with each other, the second resistance (40) is connected between the first connecting portion (104a) and the first electrode terminal (100) in series,
the first short circuit component (60) contacts with the first extending portion (104b) after deforming by effect of pressure;
either the first resistance (30) is connected between the second resistance (40) and the top cover plate (50) in series, or the first resistance (30) is connected between the first connecting portion (104a) and the top cover plate (50) in series.

5. The top cover structure for a power battery according to claim 4, **characterized in that**, when the first resistance (30) is connected between the first connecting portion (104a) and the top cover plate (50) in series,
the second resistance (40) is at least one of forms consisting of:
form one, the second resistance (40) is a resistance layer;
form two, the second resistance (40) is either integrated or arranged onto the first conductive plate (102).

6. The top cover structure for a power battery according to claim 5, **characterized in that**, the second resistance (40) is integrated onto the first connecting portion (104a), a structure of the first conductive plate (102) is as follows:
the first conductive plate (102) comprises a first conductive layer (104d) and a second conductive layer (104e), the first conductive layer (104d) and the second conductive layer (104e) are arranged by stacking, the first conductive layer (104d) is configured to contact with the second short circuit component (70), and a resistivity of the first conductive layer (104d) and a resistivity of the second short circuit component (70) are both less than a resistivity of the second conductive layer (104e).

7. The top cover structure for a power battery according to claim 1, **characterized in that**, the second resistance (40) is connected with the first resistance (30) in parallel.

8. The top cover structure for a power battery according to claim 7, **characterized in that**, the first electrode assembly (10) comprises a first electrode terminal (100) and a first conductive plate (102), the first electrode terminal (100) passes through the top cover plate (50),
the first conductive plate (102) comprises a first connecting portion (104a) and a first extending portion (104b) which are connected with each other, the first short circuit component (60) contacts with the first extending portion (104b) after deforming by effect of pressure,
the second resistance (40) is connected between the first connecting portion (104a) and the first extending portion (104b) in series;
the first resistance (30) is connected between the first connecting portion (104a) and the top cover plate (50) in series, or the first resistance (30) is connected between the first electrode terminal (100) and the top cover plate (50) in series.

9. The top cover structure for a power battery according to claim 4 or 8, **characterized in that**, on the first conductive plate (102), the first extending portion (104b) and the first short circuit component (60) adopt a same material.

10. The top cover structure for a power battery according to claim 7, **characterized in that**, the first electrode assembly (10) comprises a first electrode terminal (100) and a first conductive plate (102), the first electrode terminal (100) passes through the top cover plate (50),
the first conductive plate (102) comprises a first connecting portion (104a) and a first extending portion (104b) which are connected with each other,
the first resistance (30) is connected between the first electrode terminal (100) and the top cover plate (50) in series, the first short circuit component (60) contacts with the first extending portion (104b) after deforming by effect of pressure,
the second resistance (40) is connected between the first electrode terminal (100) and the first conductive plate (102) in series.

11. The top cover structure for a power battery according to claim 10, **characterized in that**, the first resistance (30) is located underneath the top cover plate (50), the second resistance (40) is located above the top cover plate (50).

12. The top cover structure for a power battery according to any one of claims 2-8, **characterized in that**, the third resistance (80) is either integrated or arranged into the second electrode assembly (20).

13. The top cover structure for a power battery according to claim 12, **characterized in that**, the second electrode assembly (20) comprises a second electrode terminal (200) and a second conductive plate (204), the second electrode terminal (200) passes through the top cover plate (50), and is connected with and insulated from the top cover plate (50),
the second conductive plate (204) is also connected with and insulated from the top cover plate (50), the second conductive plate (204) comprises a second connecting portion (204a) and a second extending portion (204b) which are connected with each other,
the second short circuit component (70) contacts with the second extending portion (204b) after deforming by effect of pressure;
the third resistance (80) is connected between the second connecting portion (204a) and the second electrode terminal (200) in series, or the third resistance (80) is connected between the second connecting portion (204a) and the second extending portion (204b) in series.

14. The top cover structure for a power battery according to claim 13, **characterized in that**, on the second conductive plate (204), the second extending portion (204b) and the second short circuit component (70) adopt a same material.

15. The top cover structure for a power battery according to claim 13, **characterized in that**,
the third resistance (80) is at least one of forms consisting of:
form one, the third resistance (80) is a resistance layer;
form two, the third resistance (80) is either integrated or arranged onto the second conductive plate (204).

16. The top cover structure for a power battery according to claim 15, **characterized in that**, the third resistance (80) is integrated onto the second conductive plate (204), a structure of the second conductive plate (204) is as follows:
the second conductive plate (204) comprises a first conductive layer (104d) and a second conductive layer (104e), the first conductive layer (104d) and the second conductive layer (104e) are arranged by stacking, the first conductive layer (104d) is configured to contact with the second short circuit component (70), and a resistivity of the first conductive layer (104d) and a resistivity of the second short circuit component (70) are both less than a resistivity of the second conductive layer (104e).

17. A power battery, **characterized in that**, comprising a bare cell (2) and the top cover structure for a power battery according to any one of claims 1-16,
the bare cell (2) has two electrodes with opposite electrical properties, one of the electrodes is electrically connected with the first electrode assembly (10), the other electrode thereof is electrically connected with the second electrode assembly (20), when an internal pressure of the power battery exceeds a reference pressure, the first short circuit component (60) and the second short circuit component (70) deform by effect of pressure, so as to form a first electrical connecting loop from the bare cell (2) back to the bare cell (2) passing through the first electrical connecting path, and to form a second electrical connecting loop from the bare cell (2) back to the bare cell (2) passing through the second electrical connecting path.

18. The power battery according to claim 17, **characterized in that**, further comprising a first connecting piece (4) and a second connecting piece (5),
one of the electrodes is electrically connected with the first electrode assembly (10) through the first connecting piece (4), the other electrode thereof is electrically connected with the second electrode assembly (20) through the second connecting piece (5), and
a fusing member (6) is formed on the first connecting piece (4) and/or the second connecting piece (5).

## Patentansprüche

1. Abdeckungsstruktur für eine Leistungsbatterie, **dadurch gekennzeichnet, dass** sie eine erste Elektrodenanordnung (10), eine zweite Elektrodenanordnung (20), einen ersten Widerstand (30), einen zweiten Widerstand (40), einen dritten Widerstand (80), eine Abdeckplatte (50), eine erste Kurzschlusskomponente (60) und eine zweite Kurzschlusskomponente (70) aufweist, wobei
die erste Elektrodenanordnung (10) mit der Abdeckplatte (50) durch den ersten Widerstand (30) jederzeit elektrisch verbunden ist, die zweite Elektrodenordnung (20) von der Abdeckplatte (50) in einem Normalzustand isoliert ist,
die erste Kurzschlusskomponente (60) und die zweite Kurzschlusskomponente (70) beide an der Abdeckplatte (50) befestigt sind,
wenn ein Innendruck der Leistungsbatterie einen Referenzdruck übersteigt, die erste Kurzschlusskomponente (60) und die zweite Kurzschlusskomponente (70) sich durch die Wirkung des Drucks verformen, um einen ersten elektrischen Verbindungspfad zu bilden, der durch die erste Elektrodenanordnung (10), die erste Kurzschlusskomponente (60), die Abdeckplatte (50), die zweite Kurzschlusskomponente (70) und die zweite Elektrodenanordnung (20) verläuft, und um einen zweiten elektrischen Verbindungspfad zu bilden, der durch die erste Elektrodenanordnung (10), den ersten Widerstand (30), die Abdeckplatte (50), die zweite Kurzschlusskomponente (70) und die zweite Elektrodenanordnung (20) verläuft, der zweite Widerstand (40) und der dritte Widerstand in Reihe in den ersten elektrischen Verbindungspfad geschaltet sind,
ein Widerstandswert des ersten Widerstands (30) größer als entweder ein Widerstandswert des zweiten Widerstands (40) oder ein Widerstandswert des dritten Widerstands (80) ist;
ein Widerstandswert des ersten Widerstands (30) zumindest 1000 Mal größer als eine Summe eines Widerstandswerts des zweiten Widerstands (40) und eines Widerstandswert des dritten Widerstands (80) ist; der Widerstandswert des ersten Widerstands (30) zwischen 1 Ohm und 100 000 Ohm liegt.

2. Abdeckstruktur für eine Leistungsbatterie nach Anspruch 1, **dadurch gekennzeichnet, dass** der erste Widerstand (30) jederzeit mit dem zweiten Widerstand (40) in Reihe geschaltet ist.

3. Abdeckstruktur für eine Leistungsbatterie nach Anspruch 2, **dadurch gekennzeichnet, dass** der zweite Widerstand (40) entweder in der ersten Elektrodenanordnung (10) integriert ist oder in dieser angeordnet ist;
die erste Kurzschlusskomponente (60) jederzeit mit der ersten Elektrodenanordnung (10) durch die Abdeckplatte (50), den ersten Widerstand (30) und den zweiten Widerstand elektrisch verbunden ist.

4. Abdeckstruktur für eine Leistungsbatterie nach Anspruch 3, **dadurch gekennzeichnet, dass** die erste Elektrodenanordnung (10) einen ersten Elektrodenanschluss (100) und eine erste leitfähige Platte (102) aufweist, der erste Elektrodenanschluss (100) durch die Abdeckplatte (50) verläuft,
die erste leitfähige Platte (102) einen ersten Verbindungsabschnitt (104a) und einen ersten Erstreckungsabschnitt (104b) aufweist, die miteinander verbunden sind, der zweite Widerstand (40) zwischen dem ersten Verbindungsabschnitt (104a) und dem ersten Elektrodenanschluss (100) in Reihe geschaltet ist,
die erste Kurzschlusskomponente (60) den ersten Erstreckungsabschnitt (104b) nach der Verformung durch die Wirkung des Drucks berührt,
entweder der erste Widerstand (30) zwischen den zweiten Widerstand (40) und die Abdeckplatte (50) in Reihe geschaltet ist, oder der erste Widerstand (30) zwischen den ersten Verbindungsabschnitt (104a) und die Abdeckplatte (50) in Reihe geschaltet ist.

5. Abdeckstruktur für eine Leistungsbatterie nach Anspruch 4, **dadurch gekennzeichnet, dass** wenn der erste Widerstand (30) zwischen den ersten verbindungsabschnitt (104a) und die Abdeckplatte (50) in Reihe geschaltet ist,
der zweite Widerstand (40) zumindest eine der Formen ist, bestehend aus:
Form eins, der zweite Widerstand (40) ist eine Widerstandsschicht;
Form zwei, der zweite Widerstand (40) ist entweder in der ersten leitfähigen Platte (102) integriert oder darauf angeordnet.

6. Abdeckstruktur für eine Leistungsbatterie nach Anspruch 5, **dadurch gekennzeichnet, dass** der zweite Widerstand (40) an dem ersten Verbindungsabschnitt (104a) integriert ist, eine Struktur der ersten leitfähigen Platte (102) wie folgt ist:
die erste leitfähige Platte (102) weist eine erste leitfähige Schicht (104d) und eine zweite leitfähige Schicht (104e) auf, die erste leitfähige Schicht (104d) und die zweite leitfähige Schicht (104e) sind durch Stapeln angeordnet, die erste leitfähige Schicht (104d) ist eingerichtet, die zweite Kurzschlusskomponente (70) zu berühren, und ein spezifischer Widerstand der ersten leitfähigen Schicht (104d) und ein spezifischer Widerstand der zweiten Kurzschlusskomponente (70) sind beide kleiner als ein spezifischer Widerstandswert der zweiten leitfähigen Schicht (104e).

7. Abdeckstruktur für eine Leistungsbatterie nach Anspruch 1, **dadurch gekennzeichnet, dass** der zweite Widerstand (40) mit dem ersten Widerstand (30) parallelgeschaltet ist.

8. Abdeckstruktur für eine Leistungsbatterie nach Anspruch 7, **dadurch gekennzeichnet, dass** die erste Elektrodenanordnung (10) einen ersten Elektrodenanschluss (100) und eine erste leitfähige Platte (102) aufweist, der erste Elektrodenanschluss (100) durch die Abdeckplatte (50) verläuft,
die erste leitfähige Platte (102) einen ersten Verbindungsabschnitt (104a) und einen ersten Erstreckungsabschnitt (104b) aufweist, die miteinander verbunden sind, die erste Kurzschlusskomponente (60) den ersten Erstreckungsabschnitt (104b) nach dem Verformen durch die Wirkung des Drucks berührt,
der zweite Widerstand (40) zwischen den ersten Verbindungsabschnitt (104a) und den ersten Erstreckungsabschnitt (104b) in Reihe geschaltet ist;
der erste Widerstand (30) zwischen den ersten Verbindungsabschnitt (104a) und die Abdeckplatte (50) in Reihe geschaltet ist, oder der erste Widerstand (30) in reihe zwischen den ersten Elektrodenanschluss (100) und die Abdeckplatte (50) geschaltet ist.

9. Abdeckstruktur für eine Leistungsbatterie nach Anspruch 4 oder 8, **dadurch gekennzeichnet, dass** an der ersten leitfähigen Platte (102) der erste Erstreckungsabschnitt (104b) und die erste Kurzschlusskomponente (60) ein gleiches Material einsetzen.

10. Abdeckstruktur für eine Leistungsbatterie nach Anspruch 7, **dadurch gekennzeichnet, dass** die erste Elektrodenanordnung (10) einen ersten Elektrodenanschluss (100) und eine erste leitfähige Platte (102) aufweist, der erste Elektrodenanschluss (100) durch die Abdeckplatte (50) verläuft,
die erste leitfähige Platte (102) einen ersten Verbindungsabschnitt (104a) und einen ersten Erstreckungsabschnitt (104b) aufweist, die miteinander verbunden sind,
der erste Widerstand (30) in Reihe zwischen den ersten Elektrodenanschluss (100) und die Abdeckplatte (50) geschaltet ist, die erste Kurzschlusskomponente (60) den ersten Erstreckungsabschnitt (104b) nach dem Verformen durch die Wirkung von Druck berührt,
der zweite Widerstand (40) in Reihe zwischen den ersten Elektrodenanschluss (100) und die erste leitfähige Platte (102) geschaltet ist.

11. Abdeckstruktur für eine Leistungsbatterie nach Anspruch 10, **dadurch gekennzeichnet, dass** der erste Widerstand (30) sich unterhalb der Abdeckplatte (50) befindet, der zweite Widerstand (40) sich über der Abdeckplatte (50) befindet.

12. Abdeckstruktur für eine Leistungsbatterie nach einem der Ansprüche 2 bis 8, **dadurch gekennzeichnet, dass** der dritte Widerstand (80) entweder in die zweite Elektrodenanordnung (20) integriert ist oder in dieser angeordnet ist.

13. Abdeckstruktur für eine Leistungsbatterie nach Anspruch 12, **dadurch gekennzeichnet, dass** die zweite Elektrodenanordnung (20) einen zweiten Elektrodenanschluss (200) sowie eine zweite leitfähige Platte (204) aufweist, der zweite Elektrodenanschluss (200) durch die Abdeckplatte (50) verläuft, und mit der Abdeckplatte (50) verbunden und von dieser isoliert ist,
die zweite leitfähige Platte (204) ebenfalls mit der Abdeckplatte (50) verbunden und von dieser isoliert ist, die zweite leitfähige Platte (204) einen zweiten Verbindungsabschnitt (204a) und einen zweiten Erstreckungsabschnitt (204b) aufweist, die miteinander verbunden sind,
die zweite Kurzschlusskomponente (70) den zweiten Erstreckungsabschnitt (204b) nach dem Verformen durch die Wirkung des Drucks berührt;
der dritte Widerstand (80) in Reihe zwischen den zweiten Verbindungsabschnitt (204a) und den zweiten Elektrodenanschluss (200) geschaltet ist, oder der dritte Widerstand (80) in Reihe zwischen den zweiten Verbindungsanschluss (204a) und den zweiten Erstreckungsabschnitt (204b) geschaltet ist.

14. Abdeckstruktur für eine Leistungsbatterie nach Anspruch 13, **dadurch gekennzeichnet, dass** an der zweiten leitfähigen Platte (204) der zweite Erstreckungsabschnitt (204b) und die zweite Kurzschlusskomponente (70) ein gleiches Material einsetzen.

15. Abdeckstruktur für eine Leistungsbatterie nach Anspruch 13, **dadurch gekennzeichnet, dass**
der dritte Widerstand (80) zumindest eine der Formen ist, bestehend aus:
Form eins, der dritte Widerstand (80) ist eine Widerstandsschicht;
Form zwei, der dritte Widerstand (80) ist entweder an der zweiten leitfähigen Platte (204) integriert oder an dieser angeordnet.

16. Abdeckstruktur für eine Leistungsbatterie nach Anspruch 15, **dadurch gekennzeichnet, dass** der dritte Widerstand (80) auf der zweiten leitfähigen Platte (204) integriert ist, eine Struktur der zweiten leitfähigen Platte (204) wie folgt ist:
die zweite leitfähige Platte (204) eine erste leitfähige Schicht (104d) und eine zweite leitfähige Schicht (104e) aufweist, die erste leitfähige Schicht (104d) und die zweite leitfähige Schicht (104e) durch Stapeln angeordnet sind, die erste leitfähige Schicht (104d) eingerichtet ist, die zweite Kurzschlusskomponente (70) zu berühren, und ein spezifischer Widerstand der ersten leitfähigen Schicht (104d) und ein spezifischer Widerstand der zweiten Kurzschlusskomponente (70) beide niedriger sind als ein spezifischer Widerstand der zweiten leitfähigen Schicht (104e).

17. Leistungsbatterie, **dadurch gekennzeichnet, dass** sie eine blanke Zelle (2) und die Abdeckstruktur für eine Leistungsbatterie nach einem der Ansprüche 1 bis 16 aufweist,
die blanke Zelle (2) zwei Elektroden mit einander entgegengerichteten elektrischen Eigenschaften aufweist, eine der Elektroden mit der ersten Elektrodenanordnung (10) elektrisch verbunden ist, die andere der Elektroden mit der zweiten Elektrodenanordnung (20) elektrisch verbunden ist, wenn ein Innendruck der Leistungsbatterie einen referenzdruck übersteigt, die erste Kurzschlusskomponente (60) und die zweite Kurzschlusskomponente (70) sich durch die Wirkung des Drucks verformen, so dass sie eine erste elektrische Verbindungsschleife von der blanken Zelle (2) zurück zu der blanken Zelle (2) bilden, die durch den ersten elektrischen Verbindungspfad verläuft, und so dass sie eine zweite elektrische Verbindungsschleife von der blanken Zelle (2) zurück zu der blanken Zelle (2) bilden, die durch den zweiten elektrischen Verbindungspfad verläuft.

18. Leistungsbatterie nach Anspruch 17, **dadurch gekennzeichnet, dass** sie ferner ein erstes Verbindungsstück (4) und ein zweites Verbindungsstück (5) aufweist,
eine der Elektroden elektrisch mit der ersten Elektrodenanordnung (10) durch das erste Verbindungsstück (4) verbunden ist, die andere der Elektroden durch das zweite Verbindungsstück (5) elektrisch mit der zweiten Elektrodenanordnung (20) verbunden ist, und
ein Schmelzelement (6) an dem ersten Verbindungsstück (4) und/oder dem zweiten Verbindungsstück (5) gebildet ist.

## Revendications

1. Structure de couvercle supérieur pour une batterie d'alimentation, **caractérisée en ce qu'**elle comprend un premier ensemble électrode (10), un second ensemble électrode (20), une première résistance (30), une deuxième résistance (40), une troisième résistance (80), une plaque de couvercle supérieur (50), un premier composant de court-circuit (60) et un second composant de court-circuit (70), dans laquelle
le premier ensemble électrode (10) est électriquement connecté à la plaque de couvercle supérieur (50) à travers la première résistance (30) en continu, le second ensemble électrode (20) est isolé de la plaque de couvercle supérieur (50) dans un état normal,
le premier composant de court-circuit (60) et le second composant de court-circuit (70) sont tous deux fixés à la plaque de couvercle supérieur (50),
lorsqu'une pression interne de la batterie d'alimentation dépasse une pression de référence, le premier composant de court-circuit (60) et le second composant de court-circuit (70) se déforment par effet de pression, de manière à former un premier trajet de connexion électrique passant à travers le premier ensemble électrode (10), le premier composant de court-circuit (60), la plaque de couvercle supérieur (50), le second composant de court-circuit (70) et le second ensemble électrode (20), et à former un second trajet de connexion électrique passant à travers le premier ensemble électrode (10), la première résistance (30), la plaque de couvercle supérieur (50), le second composant de court-circuit (70) et le second ensemble électrode (20), la deuxième résistance (40) et la troisième résistance (80) sont connectées dans le premier trajet de connexion électrique en série ;
une valeur de résistance de la première résistance (30) est supérieure à une valeur de résistance de la deuxième résistance (40) ou à une valeur de résistance de la troisième résistance (80) ;
une valeur de résistance de la première résistance (30) est au moins 1 000 fois supérieure à une somme d'une valeur de résistance de la deuxième résistance (40) et d'une valeur de résistance de la troisième résistance (80) ; la valeur de résistance de la première résistance (30) est comprise entre 1 Ω et 100 000 Ω.

2. Structure de couvercle supérieur pour une batterie d'alimentation selon la revendication 1, **caractérisée en ce que** la première résistance (30) est connectée à la deuxième résistance (40) en série en continu.

3. Structure de couvercle supérieur pour une batterie d'alimentation selon la revendication 2, **caractérisée en ce que** la deuxième résistance (40) est soit intégrée, soit agencée dans le premier ensemble électrode (10) ;
le premier composant de court-circuit (60) est électriquement connecté au premier ensemble électrode (10) à travers la plaque de couvercle supérieur (50), la première résistance (30) et la deuxième résistance (40) en continu.

4. Structure de couvercle supérieur pour une batterie d'alimentation selon la revendication 3, **caractérisée en ce que** le premier ensemble électrode (10) comprend une première borne d'électrode (100) et une première plaque conductrice (102), la première borne d'électrode (100) passe à travers la plaque de couvercle supérieur (50),
la première plaque conductrice (102) comprend une première partie de connexion (104a) et une première partie d'extension (104b) qui sont connectées l'une à l'autre, la deuxième résistance (40) est connectée entre la première partie de connexion (104a) et la première borne d'électrode (100) en série,
le premier composant de court-circuit (60) vient en contact avec la première partie d'extension (104b) après une déformation par effet de pression ;
soit la première résistance (30) est connectée entre la deuxième résistance (40) et la plaque de couvercle supérieur (50) en série, soit la première résistance (30) est connectée entre la première partie de connexion (104a) et la plaque de couvercle supérieur (50) en série.

5. Structure de couvercle supérieur pour une batterie d'alimentation selon la revendication 4, **caractérisée en ce que**, lorsque la première résistance (30) est connectée entre la première partie de connexion (104a) et la plaque de couvercle supérieur (50) en série,
la deuxième résistance (40) est au moins l'une de formes composées de :
forme une, la deuxième résistance (40) est une couche de résistance ;
forme deux, la deuxième résistance (40) est soit intégrée, soit agencée sur la première plaque conductrice (102).

6. Structure de couvercle supérieur pour une batterie d'alimentation selon la revendication 5, **caractérisée en ce que** la deuxième résistance (40) est intégrée sur la première partie de connexion (104a), une structure de la première plaque conductrice (102) est la suivante :
la première plaque conductrice (102) comprend une première couche conductrice (104d) et une seconde couche conductrice (104c), la première couche conductrice (104d) et la seconde couche conductrice (104e) sont agencées par empilement, la première couche conductrice (104d) est configurée pour venir en contact avec le second composant de court-circuit (70), et une résistivité de la première couche conductrice (104d) et une résistivité du second composant de court-circuit (70) sont toutes deux inférieures à une résistivité de la seconde couche conductrice (104e).

7. Structure de couvercle supérieur pour une batterie d'alimentation selon la revendication 1, **caractérisée en ce que** la deuxième résistance (40) est connectée à la première résistance (30) en parallèle.

8. Structure de couvercle supérieur pour une batterie d'alimentation selon la revendication 7, **caractérisée en ce que** le premier ensemble électrode (10) comprend une première borne d'électrode (100) et une première plaque conductrice (102), la première borne d'électrode (100) passe à travers la plaque de couvercle supérieur (50),
la première plaque conductrice (102) comprend une première partie de connexion (104a) et une première partie d'extension (104b) qui sont connectées l'une à l'autre, le premier composant de court-circuit (60) vient en contact avec la première partie d'extension (104b) après une déformation par effet de pression,
la deuxième résistance (40) est connectée entre la première partie de connexion (104a) et la première partie d'extension (104b) en série ;
la première résistance (30) est connectée entre la première partie de connexion (104a) et la plaque de couvercle supérieur (50) en série, ou la première résistance (30) est connectée entre la première borne d'électrode (100) et la plaque de couvercle supérieur (50) en série.

9. Structure de couvercle supérieur pour une batterie d'alimentation selon la revendication 4 ou 8, **caractérisée en ce que**, sur la première plaque conductrice (102), la première partie d'extension (104b) et le premier composant de court-circuit (600) adoptent un même matériau.

10. Structure de couvercle supérieur pour une batterie d'alimentation selon la revendication 7, **caractérisée en ce que** le premier ensemble électrode (10) comprend une première borne d'électrode (100) et une première plaque conductrice (102), la première borne d'électrode (100) passe à travers la plaque de couvercle supérieur (50),
la première plaque conductrice (102) comprend une première partie de connexion (104a) et une première partie d'extension (104b) qui sont connectées l'une à l'autre,
la première résistance (30) est connectée entre la première borne d'électrode (100) et la plaque de couvercle supérieur (50) en série, le premier composant de court-circuit (60) vient en contact avec la première partie d'extension (104) après une déformation par effet de pression,
la deuxième résistance (40) est connectée entre la première borne d'électrode (100) et la première plaque conductrice (102) en série.

11. Structure de couvercle supérieur pour une batterie d'alimentation selon la revendication 10, **caractérisée en ce que** la première résistance (30) est située sous la plaque de couvercle supérieur (50), la deuxième résistance (40) est située au-dessus de la plaque de couvercle supérieur (50).

12. Structure de couvercle supérieur pour une batterie d'alimentation selon l'une quelconque des revendications 2-8, **caractérisée en ce que** la troisième résistance (80) est soit intégrée, soit agencée dans le second ensemble électrode (20).

13. Structure de couvercle supérieur pour une batterie d'alimentation selon la revendication 12, **caractérisée en ce que** le second ensemble électrode (20) comprend une seconde borne d'électrode (200) et une seconde plaque conductrice (204), la seconde borne d'électrode (200) passe à travers la plaque de couvercle supérieur (50), et est connectée à et isolée de la plaque de couvercle supérieur (50),
la seconde plaque conductrice (204) est également connectée à et isolée de la plaque de couvercle supérieur (50), la seconde plaque conductrice (204) comprend une seconde partie de connexion (204a) et une seconde partie d'extension (204b) qui sont connectées l'une à l'autre,
le second composant de court-circuit (70) vient en contact avec la seconde partie d'extension (204b) après une déformation par effet de pression ;
la troisième résistance (80) est connectée entre la seconde partie de connexion (204a) et la seconde borne d'électrode (200) en série, ou la troisième résistance (80) est connectée entre la seconde partie de connexion (204a) et la seconde partie d'extension (204b) en série.

14. Structure de couvercle supérieur pour une batterie d'alimentation selon la revendication 13, **caractérisée en ce que**, sur la seconde plaque conductrice (204), la seconde partie d'extension (204b) et le second composant de court-circuit (70) adoptent un même matériau.

15. Structure de couvercle supérieur pour une batterie d'alimentation selon la revendication 13, **caractérisée en ce que**
la troisième résistance (80) est au moins l'une de formes composées de :
forme une, la troisième résistance (80) est une couche de résistance ;
forme deux, la troisième résistance (80) est soit intégrée, soit agencée sur la seconde plaque conductrice (204).

16. Structure de couvercle supérieur pour une batterie d'alimentation selon la revendication 15, **caractérisée en ce que** la troisième résistance (80) est intégrée sur la seconde plaque conductrice (204), une structure de la seconde plaque conductrice (204) est la suivante :
la seconde plaque conductrice (204) comprend une première couche conductrice (104d) et une seconde couche conductrice (104e), la première couche conductrice (104d) et la seconde couche conductrice (104e) sont agencées par empilement, la première couche conductrice (104d) est configurée pour venir en contact avec le second composant de court-circuit (70), et une résistivité de la première couche conductrice (104d) et une résistivité du second composant de court-circuit (70) sont toutes deux inférieures à une résistivité de la seconde couche conductrice (104e).

17. Batterie d'alimentation, **caractérisée en ce qu'**elle comprend une cellule nue (2) et la structure de couvercle supérieur pour une batterie d'alimentation selon l'une quelconque des revendications 1-16,
la cellule nue (2) présente deux électrodes avec des propriétés électriques opposées, l'une des électrodes est électriquement connectée au premier ensemble électrode (10), l'autre électrode de celle-ci est électriquement connectée au second ensemble électrode (20), lorsqu'une pression interne de la batterie d'alimentation dépasse une pression de référence, le premier composant de court-circuit (60) et le second composant de court-circuit (70) se déforment par effet de pression, de manière à former une première boucle de connexion électrique de la cellule nue (2) de retour vers la cellule nue (2) en passant à travers le premier trajet de connexion électrique, et pour former une seconde boucle de connexion électrique de la cellule nue (2) de retour vers la cellule nue (2) en passant à travers le second trajet de connexion électrique.

18. Batterie d'alimentation selon la revendication 17, **caractérisée en ce qu'**elle comprend en outre une première pièce de connexion (4) et une seconde pièce de connexion (5),
l'une des électrodes est électriquement connectée au premier ensemble électrode (10) à travers la première pièce de connexion (4), l'autre électrode de celle-ci est électriquement connectée au second ensemble électrode (20) à travers la seconde pièce de connexion (5), et
un élément de fusion (6) est formé sur la première pièce de connexion (4) et/ou la seconde pièce de connexion (5).
